# EUROPEAN PATENT APPLICATION

(11) **EP 0 713 315 A1**
(43) Date of publication of application: **22.05.1996**
(21) Application number: 95919460.6
(22) Date of filing: 18.05.1995
(51) Int. Cl.: H04M 1/66

(54) **APPARATUS FOR CONTROLLING THE TELEPHONE ACCESS OF IN-COMING CALLS**

(30) Priority: 19.05.1994 ES 9401104
(71) Applicant: APROVISIONAMIENTO DE ZUMOS NATURALES, S.R.L., E-08902 Hospitalet de Llobregat (ES)
(72) Inventor: MUNOZ COTES, Esteban, E-08902 Hospitalet de LLobregat (ES)
(74) Representative: Durán Olivella, Alfonso
(86) International application number: ES9500061
(87) International publication number: WO9532576

(57) **Abstract**

The apparatus comprises a control module including a microcontroler connected to the telephone line, through a module for coupling the interface and line separator, and a call detector, the control module being connected to a memory of displayable and/or speech convertible and keyboard data and to a utilisation program memory, as well as to both electronic switching and option switches and to a synthesizer with message memories and to a DTMF decoder, the apparatus providing for the optional control of in-coming calls according to a total admission or total rejection criterion and according to an intermediary criterion of request and reception of a coding signal to permit access to an in-coming call.

## Description

The present invention deals with a set aimed to allow the phone access control, allowing to get the optional control of a phone set or terminal with regard to incoming calls.

The related set of the preset invention is suitable for automatic control, according to several function range options, of phone sets to which it will be allowed controlled access of external calls. Its main application areas will be, therefore, offices and bureaus and also particular phones, giving to the user the means to limitate the free outer phone access to its phone set or terminal.

As it is well known, the actual phone sets have a direct access from any other phone set connected to the same network. This constrains the user to attend any incoming call, resulting in incommodity due to the loosing of time spent in attending calls that, in may cases, are of no interest for him.

The aim of the set of the present invention is to give the means in order to allow the own phone set to limitate the access from the others sets in the network, resulting in a barrier against the incoming calls to the phone set or terminal. To do this, the apparatus of the present invention will have the means able to work with several modes of limiting service, such as:
a) possibility of admitting any incoming call.
b) possibility of admitting only momentarily allowed incoming calls.
c) possibility of admitting only incoming calls. from previously authorized calling numbers.
d) possibility of refusing all incoming calls.

Briefly explained, the operation of the phone access control set of this invention will cover the following operations:
1) Dialling of the protected phone number, starting the operation of the set.
2) The controller set will ask for the code, if incoming calls have been put under access control.
3) Dialling, or spelling, the phone code using the same dialler that was used to call the phone number or the own voice, so as the set will identify the code and, if it matches any of the authorized numbers, the receiver phone set or terminal will be connected and the set will display or spell, or both, the incoming code. If the code does not match, the set will send back simply a pre-recorded message.
4) If required, the set will refuse all incoming calls sending back a pre-recorded message.

This control set will be compound basically by a microprocessor interconnected to a data memory to be displayed when needed, to a keyboard for data access, and to a second memory that holds the program. It is also connected to a switch that sets the calls options and to a voice synthesizer with memory that holds the pre-recorded messages which is connected to a decoder and a line modulator. Also the microcontroller will be connected to a incoming call detector and to a relay with switching contacts to establish the connection/disconnection of the line. The whole system will be connected to the phone line optionally coupled with galvanic separation or directly. It is also included a detector for the phone hold on/off situation and also a call signal generator. The set will be build on a flat box that fits easy over the surface of a table and will have in the upper face the keyboard for the input of data and commands, switches for selecting options and indicators of the actual status of the service, line busy, recorded codes, etc. Outer connections will be based in connectors for power, entry and exit for the telephone line and other optional outlets. When the local phone is included in the outer network and has a particular line and number the call signal generator will be replaced by a phone number dialler and a voice coupler.

In the following a preferred embodiment of the control set according to the present invention will be described with regard to the enclosed figures, in which:

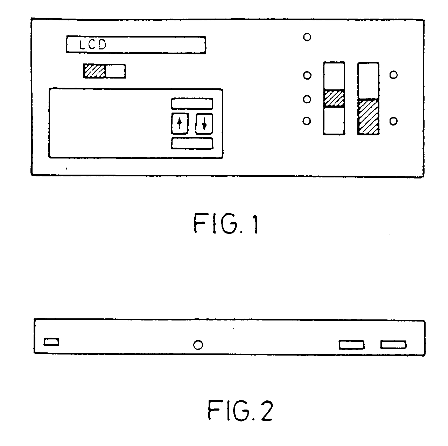

Figure 1 is a drawing of the related set according to the present invention, top view.
Figure 2 shows the same set than in Figure 1, side view.
Figure 3 depicts the block diagram for the different modules that compound the set of the present invention.
Figures 4 to 7 are block diagrams of the links between functions of the set of the present Patent.

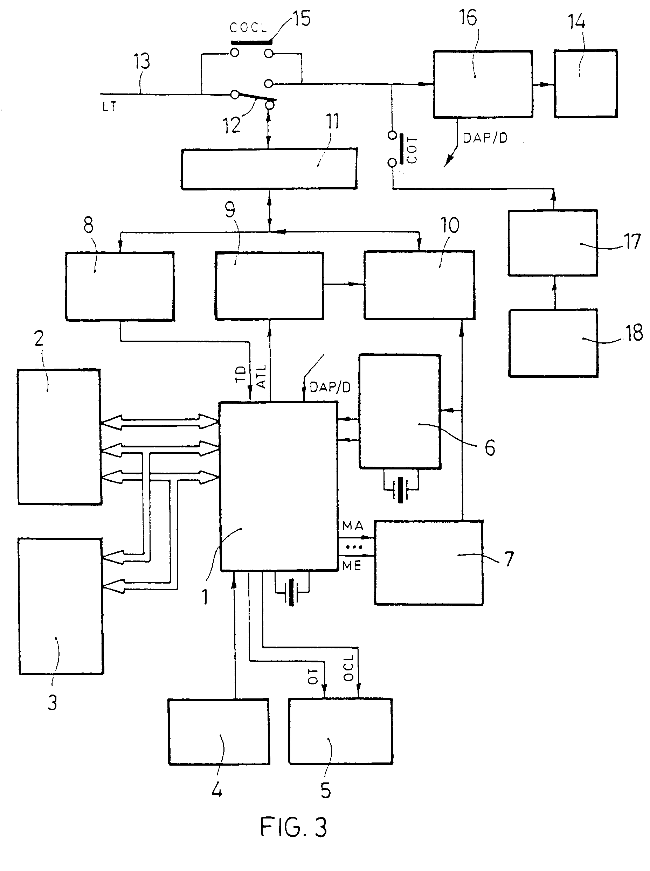

As it is depicted in Figure 3, the control set of the present invention is compound by one central control unit as a microcontroller -1- linked to a data memory, data to be displayed, and the keyboard -2-, to introduce data and commands to the control module and to the program memory -3- and also to a switch for options -4- and to an electronic switch -5-, to a decoder -6- and to a voice synthesizer with memory with messages as it is indicated in -7-. The microcontroller is linked to a module for detection of incoming calls -8- and the module -9- for control of the line connection or cut out that is connected to a line modulator -10- connected to the decoder -6- and voice synthesizer -7-.

Both the incoming calls detector -8- and the modulation unit -10- are linked to a coupler and line separator interface -11-, that can be connected by means of the switch -12- to the phone line -13-. The connection from the outer line -13- to the local phone system -14- can be made either by means of the switch -12- or directly by means of the switch -15-. It is included the detector of phone set hold on -16- and a call signal generator -17- powered by the unit -18-. Optionally the local phone set or internal terminal could be an external phone within the network with its own phone number, in this case the switch -12- will be changed by a phone dialler and both phones will be connected when the last one answer to the calls.

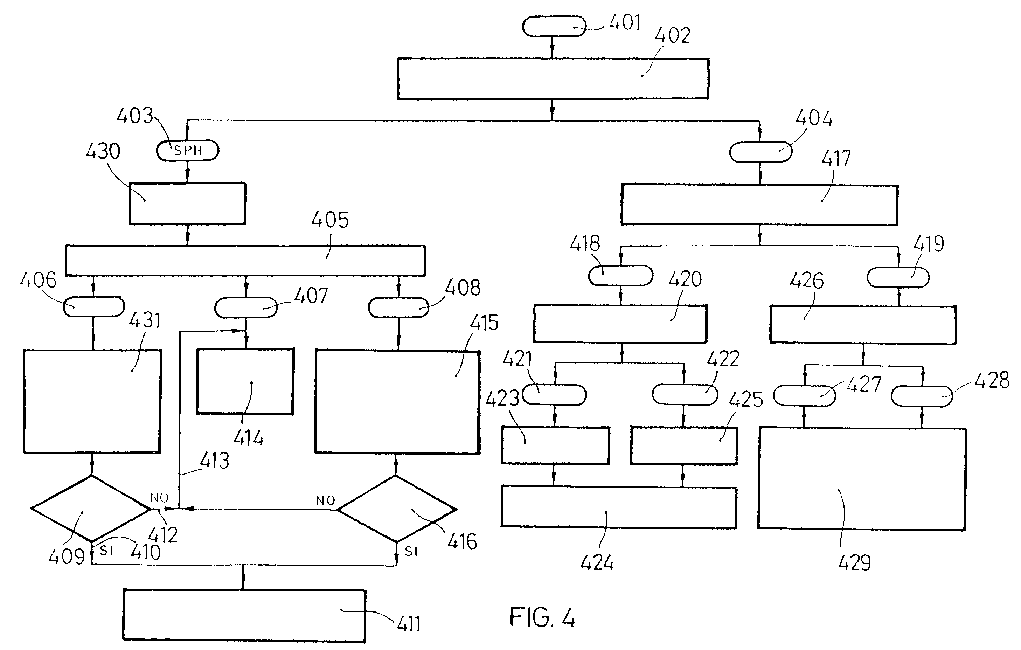

The diagram of Figure 4 starts at the box -401- that stands for 'start'. The next box -402- stands for the parallel process of operation, as a control set of "secret phone" -403- and as agenda -404-. The function "secret phone" (SPH) waits for the incoming call and establishes the communication with the outer caller, box -430- reading the status of calls switch, box -405-, that can be one of three, calls "of the day", -406-, no calls, -407- and all calls, -408-. When the calls switch is in "day calls", the followings steps are performed, box -431-:
- sends back the message "enter your personal code, please".
- decodes the received code.
- compares the received code with all codes stored in memory having the indication of the day. The search, box -409-, may be positive or negative, passing through link -410- to the operations corresponding to functional box -411-, as follows:
- sends back the message "just a moment, please".
- generates a call signal to the local phone set or terminal.
- waits till phone set hold on condition is detected.
- if the local phone set or terminal does not answer then sends back the message "in this moment your call can not be attended, call again later, please" and cuts out the communication.
- if the local phone set or terminal does answer then indicates to the user the caller data, by means of the display, direct voice, or both, after this establishes the communication until its end is detected.

If in the phase -409- it is not found a match then the process goes, through links -412- and -413- to the output of the phase -407-, that is, the box -414- with the following functions:
- sends back the message "call again later, please".
- cuts the communication.

After phase -408- the following operations are performed, box -415-:
- sends back the message "enter your personal code, please".
- decode the received code.
- compares the received code with all codes stored in memory, box -416-. The result of the search goes similarly to the phase -409-.

When in mode agenda, it is determined the next action to do, box -417-, to read, box -418-, or to write, box -419. When reading it is checked the calls switch, box -420- to know if only "day call", box -421-, are selected or all calls, box -422-. After phase -421- only "day calls" are selected, box -423-, after this the matching records are displayed in ascending or descending order, box -424-. After phase -422- all records are selected, box -425-, after this it is entered the phase -424-, explained before.

When writing on to the agenda, box -419-, the calls switch is checked, box -426, to determine if "day calls", box -427-, or all calls, box -428- are selected. After these phases, -427- and -428-, the following actions are taken, box -429-:
- Identification.
- displaying.
- possibility of erasure.

Data is stored in non volatile memory.

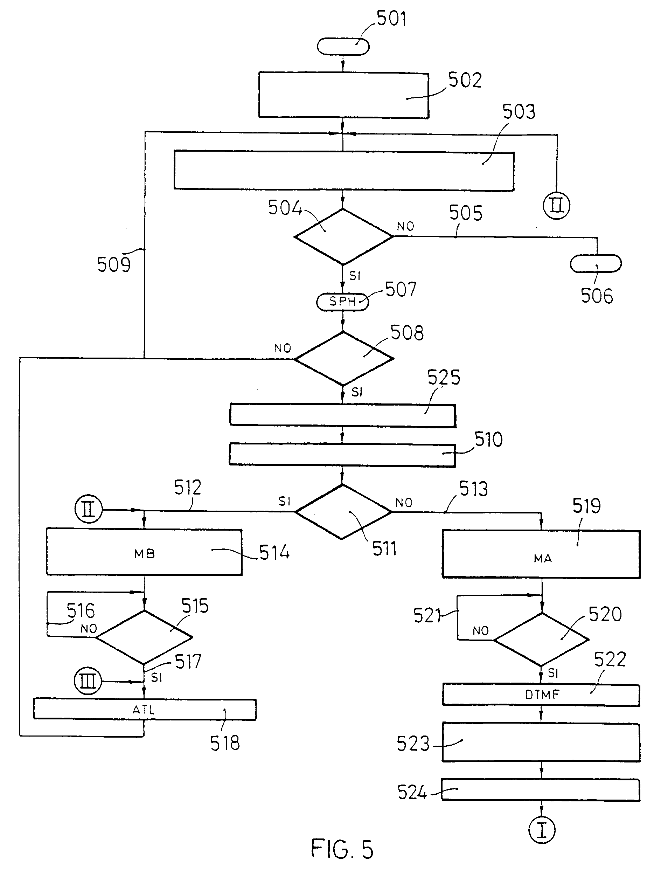

Figures 5 to 7 detail the procedure. Figure 5 starts in box -501-. First actions are to initiate the system, I/O ports programming, etc., box -502-, next is to proceed in parallel with two functions: SPH and agenda, box -503-. SPH function has higher priority and this is determined in box -504-. When no SPH function is required it goes, through link -505, to the agenda function, box -506-, the same than box -703-, explained later. When SPH function is required, box -507-, checks for local phone set hold on bit status, if positive then establishes direct communication between the local phone and the line until its end. If the local phone hold on bit is off then checks for the incoming call, box -508-, if positive then the process goes on, if negative loops to the beginning, through link -509-.

When positive in box -508- the process goes to phase -525- that establishes the communication, after this goes to box 510 to get the status "no one call" of the calls switch, box -511-, it can be positive, box -512- or negative, box -513-, when positive goes to box -514-, then the control lines of the voice synthesizer are activated in order to send the message "call again later, please", the end of this message, positive exit of box -515- in the loop -516-, will move the process through link -517- to cut out the communication, box -518-.

When result of box -512- is negative, box -513-, the process enter in phase -519- where the control lines of the voice synthesizer are activated in order to send the message "enter your personal code, please". The end of this message, positive exit of box -520- in the loop -521-, will move the process to the next step, namely, box -523-, to activate the decoder DTMF. The registers of the decoder are stored in box -523-. After this the calls switch is read to obtain the status of "day calls" option, box -524-.

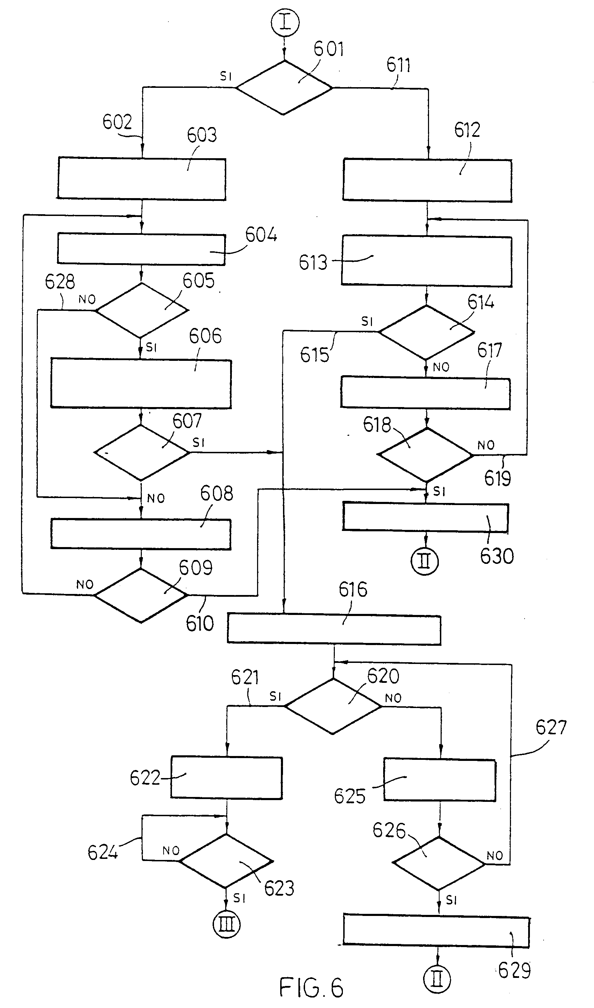

Figure 6 depicts the next step following phase -524-. It starts in box -601- marked with I. At this point it is checked whether it is selected from the calls switch the option "day calls". If does, link -602-, then it goes to the phase -603- to put the first data memory address, then it goes to phase -604- to identify the actual memory address as marked as "day call". The check is made in box -605-. If it matches then it loads the received code and the code of the actual memory address, box -606-, to check their coincidence, box -607-. If the result of phase -605- is negative, then it goes to the output of phase -607, through link -628-. If the result of phase -607- is negative then the next step, phase -608- will increment the memory address and will check if its end has been reached, phase -609-. If does, trough link -610-, goes to the box -630-.

If the result of phase -601- is negative then, through link -611-, goes to box -612- to put the first data memory address, then it goes to box -613- to load the received code and to compare it with the code of the actual memory address, box -614-. If the received code compares then, through link -615-, calls the local phone set while sending back the message "just a moment, please". If does not compare then increments the memory address, box -617- and checks whether the end of data memory has been reached, box -618-. If so sends back the message "unknown code", and then goes to the output II, the same type that corresponds to the phase -609-. If the end of data memory has not been reached, through link -619-, then goes to the output of phase -612-.

Next phase after -612- is phase -620-, to detect the condition of local phone set hold on. If positive, through link -621- then connects the line, box -623-, and checks the condition of local phone set hold off. If positive then goes to the output marked III that goes to phase -515- in Figure 5. If negative then, through link -624-, loops to the beginning of phase -623- until the result is positive.

If the result of phase -620- is negative then starts a timer, box -625-, and checks its finish, box -626-. If the timer exhausts then sends back the message "in this moment your call can not be attended", box -629-, and it goes to the output of type II. If the timer is still busy then, through link -627- goes to the beginning of phase -620-.

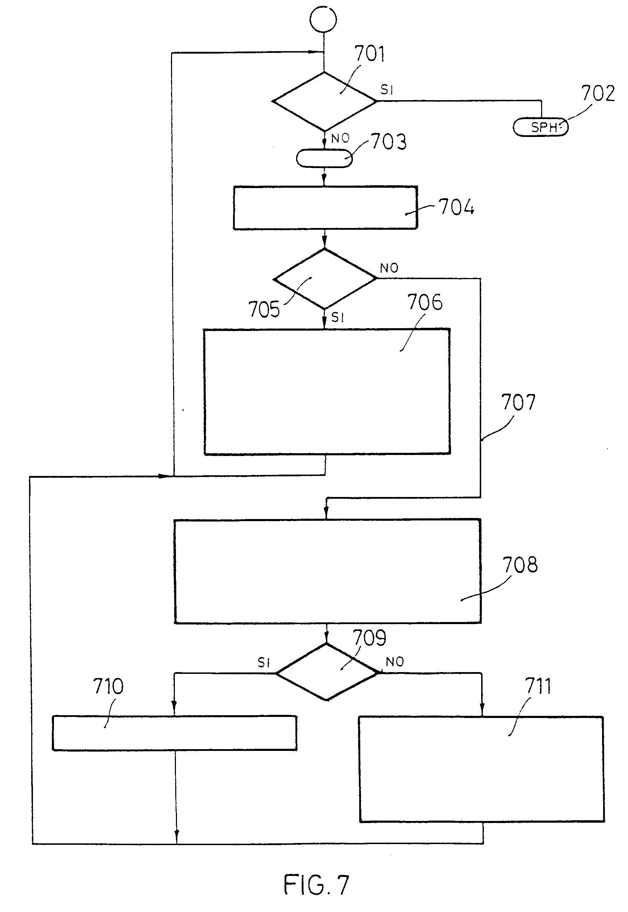

Figure 7 starts with the box -701-, that coincides with box -504-, to check whether exists the prioritary process SPH or not. If does exist, then goes to box -702-, that coincides with box -507-. If does not then goes to box -703-, that coincides with box -506-, that stands for agenda. Next it goes to phase -704- where it reads the status of the calls switch. Next checks whether it must read or not, box -705-. If does then goes to phase -706- to perform the following steps:
- identifies the type of selected code from the calls switch, "day calls" or all calls.
- according to this code displays the data.
- next data to be displayed can be in ascending or descending order.

If the result of phase -705- is negative it goes, through link -707-, to the phase -708- with similar characteristics and same functions than phase -706-. Next it goes to phase -709- to check whether there it must be data erase or not. If does, then goes to erase the displayed data, phase -710-. If does not then goes to phase -711- that allows to write or modify the stored data when pressing 'enter' key. For new records it allocates a free area of memory to store them.

Next follows the description of the signals that appear in Figure 3, I/O signals for the control module (SPH) and input keys for agenda module.

| CONTROL MODULE (SPH) | |
|---|---|
| INPUTS | OUTPUTS |
| TD - Incoming call detected | ATL - Cut out line. |
| DAP/D - Local phone set hold on or off positions detected | MA..ME - To active messages: "Enter your personal code, please" |
| | "Just a moment, please" |
| ACC - Agenda access | "Unknown code" |
| | "Call again later, please" |
| LOA - Calls switch option "Day calls" | OT - Order to call, it closes the contact COT. |
| LOB - Calls switch option "All calls" | |
| LOC - Calls switch option "No one call" | OCL - Order to connect the line. It closes the contact COCL. |

| CONTROL MODE (Agenda) | |
|---|---|
| INPUTS | |
| ACC - Access to agenda mode toggle switch. (YES/NO) | |
| LD - "Day calls" toggle switch. (YES/NO) | |
| ENTER - "Carry return", order to accept input data or command. | |
| CLR - "Delete" Erase. | |
| "↑" - Memory access ascending order↑. | |
| "↓" - Memory access descending order↓. | |

## Claims

1. Phone access control set, characterized in that it comprises a microcontroller control module connected to a phone line, by means of a coupler interface and line separator and a call detector, the control module being also connected to a data memory to be either displayed or spelled or both, and a keyboard, and to a program memory, to options switches and to electronic switching means, to a voice synthesizer with a memory for messages and to a decoder DTMF, permitting to carry out the optional control of incoming calls according to a criterion of total admission or total refuse and, according to a criterion of code petitioning and receiving, to allow access to a incoming call.

2. Phone access control set, according to claim 1, characterized in that it comprises a switch to connect to the coupler interface and a second switch to connect directly to the phone set, or any other phone equipment, to be controlled, which second switch will be optionally replaced by a phone number dialler when the phone set is external.

3. Phone access control set, according to claim 2, characterized for having the connexion of the phone set, or sets, to be controlled with the phone line with a detector of phone set hold on/off status, fed by the same system that feeds the call signal generator.

4. Phone access control set, according to claim 1, characterized in that the DTMF decoder is connected with the voice synthesizer and with the modulator line unit.

## Amended claims

### Amended claims under Art. 19.1 PCT

1. Phone access control set, characterized in that it comprises a microcontroller control module connected to a phone line, by means of a coupler interface and line separator and a call detector, the control module being also connected to a data memory to be either displayed or spelled or both, and a keyboard, and to a program memory, to options switches and to electronic switching means, to a voice synthesizer with a memory for messages and to a decoder DTMF, and/or voice emitted words identifying means permitting to carry out the optional control of incoming calls according to a criterion of total admission or total refuse and, according to a criterion of code petitioning and receiving, to allow access to a incoming call.

2. Phone access control set, according to claim 1, characterized in that it comprises a switch to connect to the coupler interface and a second switch to connect directly to the phone set, or any other phone equipment, to be controlled, which second switch will be optionally replaced by a phone number dialler when the phone set is external.

3. Phone access control set, according to claim 2, characterized for having the connexion of the phone set, or sets, to be controlled with the phone line with a detector of phone set hold on/off status, fed by the same system that feeds the call signal generator.

4. Phone access control set, according to claim 1, characterized in that the DTMF decoder is connected with the voice synthesizer and with the modulator line unit.
